# EUROPÄISCHE PATENTSCHRIFT

(11) **EP 1 441 134 B1**
(45) Veröffentlichungstag und Bekanntmachung des Hinweises auf die Patenterteilung: **22.03.2006**
(21) Anmeldenummer: 03001646.3
(22) Anmeldetag: 24.01.2003
(51) Int. Cl.: F16B 21/20, A47C 7/54

(54) **Steckverbindung**
Plug-in connection
Connexion par emboîtement

(43) Veröffentlichungstag der Anmeldung: 28.07.2004
(73) Patentinhaber: Sedus Stoll AG, 79761 Waldshut-Tiengen (DE)
(72) Erfinder: Maier, Klaus, 79875 Dachsberg (DE); Stenzel, Thomas, 79761 Waldshut-Tiengen (DE); Tritschler, Alexander, 79761 Waldshut-Tiengen (DE)
(74) Vertreter: Lück, Gert

(56) Entgegenhaltungen:
- US-A- 3 007 726
- US-A- 4 586 734
- US-A- 5 603 530
- US-A- 5 746 479
- PATENT ABSTRACTS OF JAPAN vol. 2003, no. 03, 5. Mai 2003 (2003-05-05) & JP 2002 325654 A (DELTA KOGYO CO LTD), 12. November 2002 (2002-11-12)

## Beschreibung

### TECHNISCHES GEBIET

Die Erfindung betrifft eine Steckverbindung für Stühle, bei denen die Armauflage einer Armlehne in einfacher aber dennoch robuster Weise mit dem Rohrgestell verbunden werden muss.

### STAND DER TECHNIK

Steckverbindungen, bei denen ein Bauteil mit einem Rohr verbunden werden soll, und wobei das Bauteil einen Zapfen aufweist der in das Rohr eingeführt und verklemmt wird, sind an sich bekannt.

Es ist auch bekannt, zum Sichern von aus mehreren Teilen bestehenden Bauelementen Federscheiben einzusetzen.

So ist zum Beispiel aus der US-A-3,007,726 eine Steckverbindung bekannt, die alle Merkmale des Oberbegriffs des Anspruchs 1 aufweist. Die bekannte Steckverbindung wird dazu verwendet, eine Spitze am Ende des Stabes eines Schirmes zu befestigen.

Ferner ist zum Beispiel aus DE 100 21 404 A1 eine Sicherungsscheibe bekannt, die eine zentrale Öffnung aufweist, durch die eine Welle hindurchtritt, und die innere und äußere, in Umfangsrichtung zueinander versetzte gekröpfte Laschen aufweist, die an der Welle bzw. der Innenwand eines Rotationsteils anliegen.

Aus DE 29610 021 U1 ist eine Sperrscheibe zum Sichern von Teilen an einer Welle bekannt, die über ihre zentrale Öffnung auf die Welle aufgeschoben wird, und die nach Innen weisende Zungen aufweist, die entgegen der Aufschieberichtung aufgebogen und an einer Stützkante an der Welle abgestützt sind.

Schließlich ist aus der US-A-5,603,530 noch ein Kupplungsring bekannt, bei dem ein von der zentralen Öffnung nach außen verlaufender Schlitz vorgesehen ist, sodass der Ring aufgespreizt und in radialer Richtung über ein Rohr geschoben werden kann.

Die bekannten Steckverbindungen weisen das Problem auf, dass sie aufwändig herzustellen und zu montieren sind, und / oder nicht genügend robust gegen ein Abreißen im Gebrauch gesichert sind. Ein Beispiel hierfür gibt das Dokument JP-A-2002 325654. Die bekannten Steckverbindungen mögen ihre speziellen Zwecke zwar erfüllen, sind aber für die Befestigung einer Armauflage auf dem Halteteil der Armlehne eines Stuhles ungeeignet.

### DARSTELLUNG DER ERFINDUNG

Es ist daher die Aufgabe der Erfindung, eine Steckverbindung für die Befestigung einer Armauflage auf dem Halteteil eines Stuhles dahingehend zu verbessern, dass sie einerseits kostengünstig produzierbar und montierbar ist, andererseits aber auch im Alltagsgebrauch eine robuste und sichere Verbindung gewährleistet.

Diese Aufgabe wird durch die Merkmale des Anspruchs 1 und der Unteransprüche gelöst.

Der Kern der Erfindung ist die Idee, die Federscheibe hinsichtlich der Laschen, des Schlitzes und der Dimensionierung so zu gestalten, dass der Zapfen der an dem Rohr zu befestigenden Armauflage einfach und ohne übermäßigen Kraftaufwand in das Rohr eingeführt werden kann, dann aber gegen ein Herausziehen maximal gesichert ist.

Mit diesem Konzept wird erreicht, dass mittels der kostengünstig herstellbaren Federscheibe die Steckverbindung in einfachster Weise montiert werden kann, dennoch aber die Verbindung praktisch unlösbar ist: der Zapfen könnte nur durch gewaltsames Umbiegen der Laschen der Federscheibe aus dem Rohr herausgezogen werden.

### KURZE BESCHREIBUNG DER ZEICHNUNGEN

Nachstehend wird die Erfindung anhand eines in Zeichnungen dargestellten Ausführungsbeispiels näher erläutert. Dabei zeigt:
Fig.1 die erfindungsgemäße Steckverbindung in Explosionsdarstellung,
Fig.2 die Steckverbindung in montiertem Zustand im Schnitt, und
Fig.3 Einzelheiten der Federscheibe der erfindungsgemäßen Steckverbindung in Draufsicht und im Schnitt.

### WEGE ZUR AUSFÜHRUNG DER ERFINDUNG

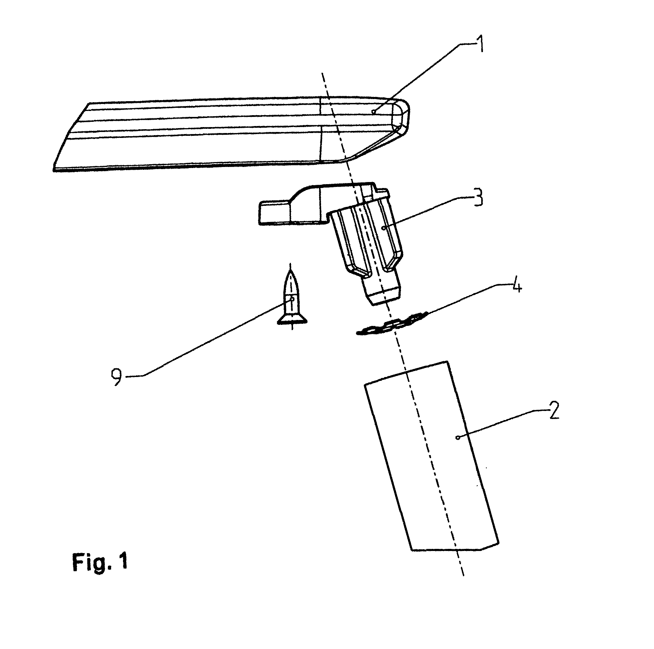

In Fig.1 ist das Bauteil 1 dargestellt, welches mittels des Zapfens 3 in dem Rohr 2 befestigt wird. Dazu wird auf den unteren Teil des Zapfens 3 die Federscheibe 4 aufgesteckt, und der Zapfen 3 mit der Federscheibe 4 in das Rohr 2 eingedrückt.

Der Zapfen 3 besteht aus Kunststoff, vorzugsweise glasfaserverstärktem Polypropylen (PP). Er kann aber auch aus Aluminium oder einem ähnlichen Material bestehen. Er wird an dem Bauteil 1 mittels der Schraube 9 befestigt. Er kann aber an dem Bauteil 1 auch angespritzt werden, wobei das Bauteil 1 dann aus dem selben Kunststoff besteht wie der Zapfen 3.

Die dargestellten Elemente sind Teil der Armlehne eines Stuhles, wobei das Bauteil 1 die Armauflage ist, welche an dem Rohr 2 des Stuhlgestells befestigt wird.

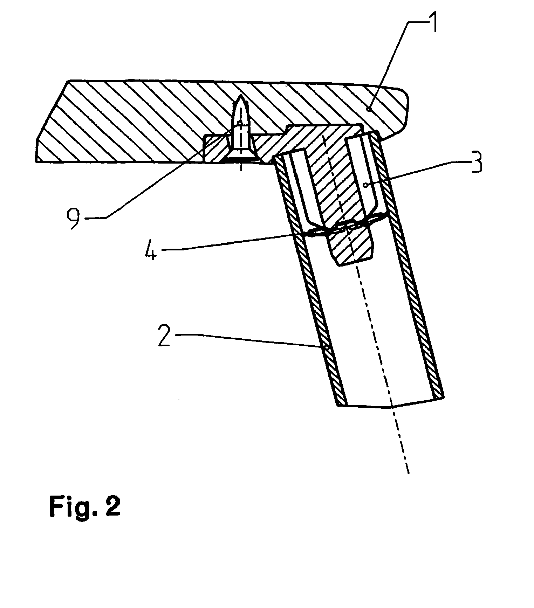

In Fig.2 sind die in Fig.1 dargestellten Elemente im montierten Zustand im Schnitt dargestellt.

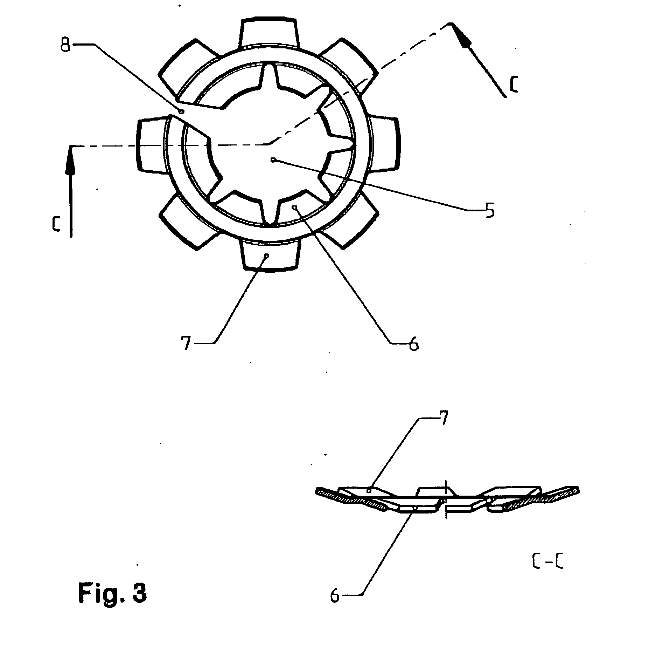

In Fig.3 ist die Federscheibe 4 im Einzelnen dargestellt:

Die Federscheibe 4 besteht aus Federstahl und ist als Kreisring mit der zentralen Öffnung 5 ausgebildet. Der Kreisring ist an seinem Außenumfang mit den Laschen 7 versehen. Nach innen weist er die Laschen 6 auf. Außerdem ist der sich von der zentralen Öffnung nach außen erstreckende Schlitz 8 vorgesehen.

Im Schnitt C-C ist zu sehen, dass die inneren Laschen 6 nach unten, und die äußeren Laschen 7 nach oben abgebogen sind.

Der Innendurchmesser der zentralen Öffnung 5 ist etwas kleiner als der Außendurchmesser des Zapfens 3. Wenn die Federscheibe 4 auf den Zapfen 3 aufgeschoben wird, weitet sich deshalb die Federscheibe 4 auf, und die inneren Laschen 6 liegen unter starker Spannung an dem Zapfen 3 an.

Der Außendurchmesser der Federscheibe 4 ist etwas größer als der Innendurchmesser des Rohres 2. Beim Eindrücken des Zapfens 3 mit Federscheibe 4 in das Rohr 2 werden daher die abgebogenen äußeren Laschen 7 unter Spannung an die Innenwand des Rohres 2 gedrückt.

Damit krallen sich die inneren und äußeren Laschen 6 und 7 fest in ihre Anlageflächen am Zapfen 3 bzw. an der Innenwand des Rohres 2 ein, und verhindern, dass der Zapfen 3 aus dem Rohr 2 herausgezogen werden kann, und die Steckverbindung damit gelöst wird.

Der feste Sitz des Zapfens 3 in dem Rohr 2 wird weiter dadurch optimiert, dass die inneren und die äußeren Laschen 6 und 7 der Federscheibe 4 um etwa 20° abgebogen sind, und die Ausnehmungen zwischen den inneren Laschen 7 jeweils Winkel von etwa 20° bilden. Die Breite der äußeren Laschen 7 ist im wesentlichen gleich. Die inneren Laschen 6 sind grundsätzlich auch gleich breit, jedoch sind die Laschen auf den beiden Seiten des Schlitzes 8 breiter als die anderen inneren Laschen.

Das Material, aus dem die Federscheibe 4 besteht, ist vorzugsweise CrNi oder Federstahl, und die Dicke der Federscheibe ist etwa 0.5 mm. Die Kröpfungen der Laschen 6 und 7 sind vorgeprägt.

### Bezeichnungsliste

- 1: Bauteil / Armauflage
- 2: Rohr
- 3: Zapfen
- 4: Federscheibe
- 5: zentrale Öffnung
- 6: innere Laschen
- 7: äußere Laschen
- 8: Schlitz
- 9: Schraube

## Patentansprüche

1. Steckverbindung eines Bauteils (1) an einem Rohr (2),
- wobei an dem Bauteil (1) ein Zapfen (3) vorgesehen ist, der in das Rohr (2) eingeführt und dort verklemmt wird,
- und wobei auf dem Zapfen (3) eine Federscheibe (4) vorgesehen ist, die eine zentrale Öffnung (5) zum Durchtritt des Zapfens (3) und in Umfangsrichtung gegeneinander versetzte innere (6) und äußere (7) Laschen aufweist,
- und wobei die inneren Laschen (6) am Zapfen (3), und die äußeren Laschen (7) an der Innenwand des Rohres (2) anliegen, und die inneren Laschen (6) vom Bauteil (1) weg, und die äußeren Laschen (7) zum Bauteil (1) hin abgebogen sind,
- und wobei der Durchmesser der zentralen Öffnung (5) der Federscheibe (4) kleiner ist als der des Zapfens (3), und der Außendurchmesser der Federscheibe (4) größer ist als der Innendurchmesser des Rohres (2),
**dadurch gekennzeichnet, dass**
- das Bauteil (1) die Armauflage, und das Rohr (2) das Halteteil der Armlehne eines Stuhles sind, dass
- in der Federscheibe (4) ein von der zentralen Öffnung (5) nach außen durchgehend verlaufender Schlitz (8) vorgesehen ist, und dass
- die Federscheibe (4) aus Federstahl besteht, die Kröpfungen der inneren und äußeren Laschen (6,7) vorgeprägt sind, und der Zapfen aus Kunststoff, vorzugsweise glasfaserverstärktem PP, oder Aluminium besteht.

2. Steckverbindung nach Anspruch 1, **dadurch gekennzeichnet, dass,** die inneren und die äußeren Laschen (6,7) jeweils um etwa 20° abgebogen sind, und die Ausnehmungen zwischen den inneren Laschen (6) jeweils Winkel von etwa 20° bilden, deren Scheitel nach außen weisen.

3. Steckverbindung nach Anspruch 1, **dadurch gekennzeichnet, dass** die äußeren Laschen (7) gleich breit sind, und von den inneren Laschen (6) die beiden dem Schlitz (8) benachbarten Laschen breiter sind als die anderen inneren Laschen, die im übrigen gleich breit sind.

## Claims

1. Plug-in connection of a component (1) to a tube (2),
- a pin (3) which is inserted into the tube (2) and clamped there being provided on the component (1),
- and a spring washer (4) which comprises a central opening (5) for passage of the pin (3) and inner tabs (6) and outer tabs (7) staggered in relation to one another in the peripheral direction being provided on the pin (3),
- and the inner tabs (6) bearing on the pin (3) and the outer tabs (7) bearing on the inner wall of the tube (2), and the inner tabs (6) being angled away from the component (1) and the outer tabs (7) being angled towards the component (1),
- and the diameter of the central opening (5) of the spring washer (4) being smaller than that of the pin (3) and the outside diameter of the spring washer (4) being larger than the inside diameter of the tube (2),
**characterized in that**
- the component (1) is the arm support and the tube (2) is the holding part of the armrest of a chair, **in that**
- a slit (8) extending continuously outwards from the central opening (5) is provided in the spring washer (4), and **in that**
- the spring washer (4) is made of spring steel, the offsets of the inner and outer tabs (6, 7) are prestamped, and the pin is made of plastic, preferably glass-fibre-reinforced PP, or aluminium.

2. Plug-in connection according to Claim 1, **characterized in that** the inner and outer tabs (6, 7) are in each case angled by roughly 20° and the cutouts between the inner tabs (6) in each case form angles of roughly 20°, the vertices of which point outwards.

3. Plug-in connection according to Claim 1, **characterized in that** the outer tabs (7) are the same width, and of the inner tabs (6) the two tabs adjacent to the slit (8) are wider than the other inner tabs, which are otherwise the same width.

## Revendications

1. Liaison par enfichage d'un composant (1) à un tube (2),
- dans laquelle un tourillon (3) est prévu sur le composant (1), qui vient s'introduire dans le tube (2) pour y être serré,
- et dans laquelle une rondelle élastique (4) est prévue sur le tourillon (3), qui présente une ouverture centrale (5) pour le passage du tourillon (3) et des pattes internes (6) et externes (7) décalées les unes des autres dans la direction périphérique,
- et dans laquelle les pattes internes (6) viennent s'appuyer contre le tourillon (3), et les pattes externes (7) venant s'appuyer contre la paroi interne du tube (2), les pattes internes (6) étant pliées dans une direction s'écartant du composant (1) et les pattes externes (7) étant pliées dans une direction orientée vers le composant (1),
- et dans laquelle le diamètre de l'ouverture centrale (5) de la rondelle élastique (4) est inférieur à celui du tourillon (3), le diamètre externe de la rondelle élastique (4) étant supérieur au diamètre interne du tube (2),
**caractérisée**
- **en ce que** le composant (1) représente la manchette et le tube (2) représente l'élément de retenue de l'accoudoir d'une chaise,
- **en ce qu'**on prévoit, dans la rondelle élastique (4), une fente s'étendant en continu vers l'extérieur à partir de l'ouverture centrale (5), et
- **en ce que** la rondelle élastique (4) est constituée d'acier à ressorts, les coudes des pattes internes et externes (6, 7) ont été soumis à un estampage préalable et le tourillon est constitué d'une matière synthétique, de préférence du polypropylène renforcé par des fibres de verre, ou encore d'aluminium.

2. Liaison par enfichage selon la revendication 1, **caractérisée en ce que** les pattes internes et les pattes externes (6, 7) sont pliées respectivement en formant un angle d'environ 20° et les évidements entre les pattes internes (6) forment respectivement des angles d'environ 20° dont les sommets sont orientés vers l'extérieur.

3. Liaison par enfichage selon la revendication 1, **caractérisée en ce que** les pattes externes (7) sont de largeur égale et, parmi les pattes internes (6), les deux pattes voisines de la fente (8) sont plus larges que les autres pattes internes qui, par ailleurs, sont de largeur égale.
